# EUROPÄISCHE PATENTSCHRIFT

(11) **EP 3 265 838 B1**
(45) Veröffentlichungstag und Bekanntmachung des Hinweises auf die Patenterteilung: **31.03.2021**
(21) Anmeldenummer: 16711964.3
(22) Anmeldetag: 09.02.2016
(51) Int. Cl.: G01S 3/805

(54) **VERFAHREN ZUM RICHTUNGSERMITTELN EINER WASSERSCHALLQUELLE RECHNERPROGRAMMPRODUKT RECHNER ODER SONAR SOWIE WASSERFAHRZEUG**
METHOD FOR DETERMINING THE DIRECTION OF A SOURCE OF WATERBORNE SOUND, A COMPUTER PROGRAM PRODUCT, A COMPUTER OR SONAR, AND A WATERCRAFT
PROCÉDÉ DE DÉTERMINATION DE LA DIRECTION D'UNE SOURCE D'UN SON TRANSMIS PAR L'EAU, PRODUIT DE PROGRAMME INFORMATIQUE, ORDINATEUR OU SONAR ET VÉHICULE NAUTIQUE

(30) Priorität: 06.03.2015 DE 102015103322
(43) Veröffentlichungstag der Anmeldung: 10.01.2018
(73) Patentinhaber: ATLAS ELEKTRONIK GmbH, 28309 Bremen (DE)
(72) Erfinder: LOGES, Werner, 14621 Schönwalde (DE)
(74) Vertreter: thyssenkrupp Intellectual Property GmbH
(86) Internationale Anmeldenummer: PCT/DE2016/100055
(87) Internationale Veröffentlichungsnummer: WO 2016/141917

(56) Entgegenhaltungen:
- EP-A1- 0 715 182
- EP-A2- 0 964 264
- DE-B3-102009 047 941

## Beschreibung

Die Erfindung betrifft ein Verfahren zum Richtungsermitteln einer Wasserschallquelle, welche ein Wasserschallsignal aussendet, mittels einer Hydrophonanordnung, welche eine Linearantenne oder eine virtuelle Linearantenne bildet, ein Rechnerprogrammprodukt sowie ein Sonar und ein Wasserfahrzeug.

Das Bestimmen eines Objektes von einem Unterwasserfahrzeug aus ist regelmäßig ein schwieriges Unterfangen, da sowohl die Richtung (Peilung) als auch die Entfernung bestimmt werden müssen. Je weiter entfernt das zu detektierende Objekt ist, desto größer wirken sich etwaige Fehler in der Bestimmung des Richtungswinkels (Peilungswinkels) aus.

Insbesondere bei Seitensichtsonaren (Passives Flank Array Sonar oder Aktives Side Scan Sonar), welche beispielsweise eine Linearantenne bilden, wird schrittweise die Linearantenne elektronisch oder rechnertechnisch geschwenkt und die jeweils ankommende Signalstärke bestimmt. Der Winkel mit der höchsten beamgeformten Signalstärke entspricht dem Richtungswinkel, anhand dessen beispielsweise eine nachgelagerte Entfernungsbestimmung erfolgt.

Um den Fehler beim Bestimmen der Richtung zu verringern, kann das elektronische Schwenken der Linearantenne mittels kleinerer Schrittweiten erfolgen. Dies hat jedoch den Nachteil, dass die entsprechenden Rechenaufwände erheblich steigen und ein Bestimmen nicht in akzeptabler Zeit erfolgt.

Mithin muss ein Verfahren bereitgestellt werden, mittels derer innerhalb zweier Messzeiträume eine möglichst genaue Richtung (Peilung) ermittelt werden kann.

EP 0 964 264 A2 zeigt ein Verfahren zur Bestimmung der Tiefe von getauchten Schallquellen unter Verwendung einer unter Wasser geschleppten akustischen Antenne zur Schallquellenortung.

DE 10 2009 047941 B3 zeigt ein Verfahren zum akustischen Vermessen eines Gewässergrundes mittels Fächerortung.

Aufgabe der Erfindung ist es den Stand der Technik zu verbessern.

Gelöst wird die Aufgabe durch ein Verfahren zum Richtungsermitteln einer Wasserschallquelle, welche ein Wasserschallsignal aussendet, mittels einer Hydrophonanordnung, welche eine Linearantenne oder eine virtuelle Linearantenne bildet, wobei das Verfahren folgende Schritte aufweist:
- Ermitteln des an der Hydrophonanordnung anliegenden Wasserschallsignals zu einer ersten Messzeit t₁,
- Durchführen einer elektronischen Antennenschwenkanalyse, welche ein Summensignal S der Linearantenne oder der virtuellen Linearantenne zu jedem Drehwinkel αₙ₌α₀±nΔα, mit α₀ als Anfangswinkel, Δα als Schrittweitenwinkel und n=0,1,2,3,4..., bestimmt, sodass eine Messreihe S (a) vorliegt,
- Bestimmen eines Maximumsummensignals Sₘₐₓ(αₘₐₓ), mit αₘₐₓ als Maximumdrehwinkel, der Messreihe S(a),
- Bestimmen einer Anpassmessreihe S_{Fit}(α), welche das Maximumsummensignal Sₘₐₓ(αₘₐₓ) und wenigstens zwei weitere Summensignale S(αₙ)ₘ, mit der Summenanzahl m=2, 3, 4..., aufweist,
- Bestimmen einer mathematischen Anpassfunktion f_{Fit}(α_{Fit}) zu der Anpassmessreihe S_{Fit}(α) mittels einer mathematischen Ausgleichsrechnung und
- Bestimmen eines Anpassfunktionsmaximums f_{Fit,Max}(α_{Fit,Max}) der mathematischen Anpassfunktion f_{Fit}(α_{Fit}), wobei mittels α _{Fit,Max} die Richtung der Wasserschallquelle bestimmbar ist.

Somit kann ein schnelles Verfahren bereitgestellt werden, welches innerhalb eines Messintervalls (Messzeit) eine verbesserte Richtungsangabe (Peilung) liefert. Zudem kann die Anzahl der Hydrophone und/oder der Rechenaufwand verringert oder entsprechend der Schrittweitenwinkel vergrößert werden. Insbesondere wird dies erfindungsgemäß dadurch erreicht, dass das mathematische Anpassverfahren und die Ermittlung des zugehörigen Maximums der Anpassfunktion sehr schnell erfolgen können. Zudem führt dies wiederrum zu einer Verbesserung der Richtungsermittlung.

### Folgendes Begriffliche sei erläutert:

Beim "Richtungsermitteln" wird zu einem Bezugspunkt, zum Beispiel der Mittelpunkt und/oder Drehpunkt der Linearantenne, die Richtung zur Unterwasserschallquelle bestimmt. In diesem Zusammenhang wird statt des Begriffes Richtung auch der Begriff Peilung verwendet. Vorliegend sind Richtung sowie Peilung synonym zu verstehen.

Eine "Wasserschallquelle" ist insbesondere ein natürlicher oder künstlicher Gegenstand, welcher Schallwellen aussendet von einem lokalisierten Bereich. Beispielsweise kann es sich um den Antrieb eines Schiffes handeln und/oder ein Punktquelle. Zudem ist eine Wasserschallquelle auch ein künstlicher oder natürlicher Gegenstand, welcher ein zuvor ausgesandtes Unterwasserschallsignal reflektiert. Beispielsweise wird ein sich auf die "Lauer" gelegtes Unterwasserfahrzeug, welches durch ein aktives Sonar eines weiteren Wasserfahrzeugs mittels Wasserschall "angepingt" wird und somit das Wasserschallsignal reflektiert, vorliegend als Wasserschallquelle verstanden.

Ein "Wasserschallsignal" ist insbesondere ein akustisches Transient-Signal im Wasser, mit ein Zeit Dauer von 10 ms bis 200 ms, welches sich insbesondere im Bereich von 2 Hz bis mehreren 100 kHz erstrecken kann, mit einer Signalform, welche Frequenz moduliert ist und/oder eine konstante Wellenlänge aufweist.

Eine "Hydrophonanordnung" umfasst insbesondere wenigstens zwei Piezokeramiken, bei welchen das Wasserschallsignal eine Spannungsänderung hervorruft, welche signaltechnisch aufbereitet wird. Je größer die Anzahl der Hydrophone ist, desto besser können Frequenzen und/oder Richtungen aufgelöst werden. Vorliegend umfasst eine derartige Hydrophonanordnung insbesondere zwischen 50 und 300 Hydrophone.

Eine "Linearantenne" ist insbesondere dann gegeben, wenn entlang einer Geraden die einzelnen Hydrophone der Hydrophonanordnung angeordnet sind. Dies ist beispielsweise bei einem Seitensichtsonar gegeben. Aber auch gekrümmte Hydrophonanordnungen oder beispielsweise Hydrophonanordnungen mit einer Zylinderbasis können eine Linearantenne bilden, welche dann vorliegend dann als virtuelle Linearantenne bezeichnet werden, da diese signaltechnisch und/oder rechentechnisch in eine Linearantenne überführt werden. Siehe hierzu Manfred Siegel; Einführung in die Physik und Technik der Unterwasserschallsysteme (ISBN 3-936799-28-8) Seite 5-52 bis Seite 5-60, dessen diesbezüglicher Inhalt Bestandteil der vorliegenden Anmeldung ist.

Eine "erste Messzeit t₁" umfasst einen Zeitraum oder ein Zeitintervall, sodass die Antennenschwenkanalyse durchgeführt werden kann. Während dieser ersten Messzeit wird insbesondere die an jedem Hydrophon aufgrund des Wasserschallsignals anliegende Spannung messtechnisch bestimmt. Mithin liegt über der Messzeit ein Messsignal an, welches sich über die Messzeit hinweg ändert.

Eine "elektronische Antennenschwenkanalyse" ist eine rechentechnisch und/oder elektronisch für jedes einzelne Hydrophon anders geartete Verzögerung, sodass die Linearantenne elektronisch oder rechentechnisch gedreht oder gekrümmt wird. Siehe hierzu Manfred Siegel; Einführung in die Physik und Technik der Unterwasserschallsysteme (ISBN 3-936799-28-8) Seite 5-41 bis Seite 5-60, dessen diesbezüglicher Inhalt Bestandteil der vorliegenden Anmeldung ist. Das Drehen oder Krümmen erfolgt insbesondere dadurch, dass die einzelnen Hydrophone mit einem unterschiedlichen Zeitversatz "ausgelesen" werden, sodass "zeitverzögerte" Hydrophone vorliegen.

Das "Summensignal S" ist insbesondere das kumulierte Signal sämtlicher (zeitverzögerter) Hydrophone. Das Summensignal kann sowohl für eine einzelne Frequenz als auch für einen Frequenzintervall bestimmt werden. Weiterhin können schlicht die Signalpegel, welche an den Hydrophonen anliegen aufaddiert werden. Mithin ist das Summensignal ein Maß für die an der Linearantenne oder der virtuellen Linearantenne anliegende Schallenergie. Das Summensignal wird zu jedem einzelnen Drehwinkel αₙ₌α₀±nΔα bestimmt, sodass zu jedem Drehwinkel αₙ jeweils das Summensignal S vorliegt.

Der "Drehwinkel" ergibt sich durch die elektronisch und/oder rechentechnisch gedrehte Linearantenne oder virtuelle Linearantenne um einen Drehpunkt. Insbesondere wird jeweils die Antenne mit einem Schrittweitenwinkel Δα =180°/Hydrophononen_Anzahl/k(Gradmaß; Vollkreis 360°) gedreht (k=3,5,7... ist der Feinpeilungsfaktor), (es gilt beispielsweise für eine Antenne mit 18 Hydrophonen und k=5, dass Δα=2° ist), sodass insgesamt bei einem Winkelausschnitt von 180° 90 Summensignalwinkel S bestimmt werden. Diese 90 Summensignalwerte S mit den zugehörigen Drehwinkeln werden dann insbesondere in der "Messreihe S(α)" abgelegt.

Um das "Maximumsummensignal Sₘₐₓ(αₘₐₓ)" zu bestimmen, wird insbesondere das betragsmäßig größte Summensignal S aus der Messreihe S(α) ermittelt. Dies kann beispielsweise mit einem sogenannten Quicksort- oder Bubblesortalgorithmus erfolgen. Der Maximumdrehwinkel αₘₐₓ ist dann der Winkel α des ermittelten Maximumsignals Sₘₐₓ.

Um die "Anpassmessreihe S_{Fit}(α)" zu bestimmen, werden zu den Maximumsummensignal Sₘₐₓ(αₘₐₓ) zusätzlich wenigstens zwei weitere Summensignale S(αₙ)ₘ ermittelt. Der Index m gibt dabei die Anzahl der zusätzlich neben dem Maximumsummensignal Sₘₐₓ(α ₘₐₓ) in der Anpassreihe S_{Fit}(α) vorliegenden weiteren Summensignale an.

Um ein besonders gutes Ergebnis zu erreichen, sind insbesondere die direkt benachbarten Summensignale um das Maximumsummensignal Sₘₐₓ(αₘₐₓ) in der Anpassreihe mit umfasst. Insbesondere werden die Summensignale symmetrisch um das Maximumsummensignal Sₘₐₓ(αₘₐₓ) verwendet. Somit weist die Anpassmessreihe S_{Fit}(α) wenigstens drei Messwerte auf. Im Fall der symmetrischen Verwendung weiterer Summensignale, weist die Anpassmessreihe 5, 7, 9, ... Summensignale auf.

Zu den in der Anpassmessreihe S_{Fit}(α) abgelegten Messwerten inklusive dem Maximumsummensignal Sₘₐₓ(αₘₐₓ) wird eine "mathematischen Anpassfunktion S_{Fit}(α) bestimmt. Das Bestimmen einer derartigen mathematischen Anpassfunktion wird auch als Regression bezeichnet. Beispielsweise wird die Annahme getroffen, dass drei in der Anpassmessreihe abgelegte Messwerte durch ein Polynom zweiter Ordnung (a₀+a₁x+a₂x²) beschreibbar sind. Somit werden die Parameter des Polynoms zweiter Ordnung derart festgelegt, dass im Idealfall alle drei Punkte auf der bestimmten mathematischen Anpassfunktion liegen.

Insbesondere kann sich dabei ergeben, dass der messtechnisch bestimmte Maximumdrehwinkel nicht mit einem Maximumdrehwinkel eines lokalen Minimums der mathematischen Anpassfunktion übereinsteinstimmt, jedoch hat sich überraschenderweise herausgestellt, dass das lokale oder globale Maximum häufig ein wesentlich korrekteren Drehwinkel für die Richtungsbestimmung einer Unterwasserschallquelle ergibt. Somit wird insbesondere numerisch oder analytisch ein Anpassmessfunktionmaximum f_{Fit,Max}(α_{Fit,Max}) der mathematischen Anpassfunktion f_{Fit}(α_{Fit}) bestimmt. Insbesondere ist die Richtung der Wasserschallquelle orthogonal zu einer Linearantenne oder virtuellen Linearantenne mit dem durch die Anpassfunktion bestimmten Drehwinkel α_{Fit,Max}, wobei die Orthogonale dabei insbesondere den Drehpunkt der Linearantenne oder virtuellen Linearantenne schneidet.

Um die Qualität und somit die Verlässlichkeit der Richtung zu der Wasserschallquelle zu verbessern, kann das Verfahren oder können Teilschritte des Verfahrens zu einer zweiten Messzeit t₂, zu einer dritten Messzeit t₃, zu einer vierten Messzeit t₄ und/oder zu weiteren Zeitpunkten t durchgeführt werden, wobei dabei die entsprechenden Messreihen S(α)ₜ oder die ermittelten Richtungen der Wasserschallquelle gemittelt werden.

Diese Herangehensweise liefert insbesondere in dem Fall hervorragende Ergebnisse, wenn sich die Wasserschallquelle nicht bewegt. Die entsprechenden Messzeiten ergeben sich insbesondere aus der jeweiligen Repetitionsrate, mit der die Hydrophonanordnung elektronisch oder rechentechnisch abgefragt wird oder einer überlagerten Fensterfunktion, welche über die jeweiligen Messkurven der Hydrophone als Filter gelegt werden.

Damit am Ende des Verfahrens auch die Richtung zu der Wasserschallquelle bestimmt werden kann, werden in dieser Ausführungsform auch die übrigen Schritte des erfindungsgemäßen Verfahrens durchgeführt.

In einer weiteren Ausführungsform sind die weiteren Summensignale benachbarte Summensignale zum Maximumsummensignal Sₘₐₓ(αₘₐₓ).

Dies ermöglicht eine hohe Messwertdichte um das Maximumsummensignal, sodass durch die mathematische Anpassfunktion der Bereich um das Maximumsignal besonders gut abgebildet wird.

Um antennenspezifische Eigenschaften ausgleichen zu können, kann die mathematische Anpassfunktion eine Polynomfunktion, eine Gaußfunktion, eine Lorentzfunktion oder eine Voigtfunktion sein.

Sowohl die Gaußfuntkion als auch die Lorentzfunktion beschreiben Glockenkurven, während beispielsweise die Voigtfunktion insbesondere eine Faltung aus der Gauß- und Lorentzfunktion ist, bei der beispielsweise Verbreiterungseffekte aufgrund des Wassers und seiner Eigenschaften auf den Unterwasserschall ausgeglichen werden können.

In einem weiteren Aspekt wird die Aufgabe gelöst durch ein Rechnerprogrammprodukt, welches derart eingerichtet ist, die Verfahrensschritte des zuvor beschriebenen Verfahrens durchzuführen, wenn das Rechnerprogrammprodukt auf einem Rechner ausgeführt wird..

Somit kann eine Software auf einem Datenträger bereitgestellt werden, welche einem Rechner oder einem Sonar Instruktionen aufprägt, dass das eingangs beschriebene erfindungsgemäße Verfahren durchführbar ist. Somit können also bestehende Rechnersysteme und/oder Sonare angepasst werden, sodass diese das Verfahren durchführen.

Auch wird in einem weiteren Aspekt die Aufgabe gelöst durch ein Sonar umfassend eine Hydrophonanordnung, welche eine Linearantenne oder eine virtuelle Linearantenne bildet, und einen Rechner, der eingerichtet ist, das zuvor beschriebene Verfahren durchzuführen.

Abschließend wird die Aufgabe gelöst durch ein Wasserfahrzeug, welches ein zuvor beschriebenes Sonar aufweist. Bei derartigen Wasserfahrzeugen kann es sich insbesondere um Schiffe oder U-Boote handeln.

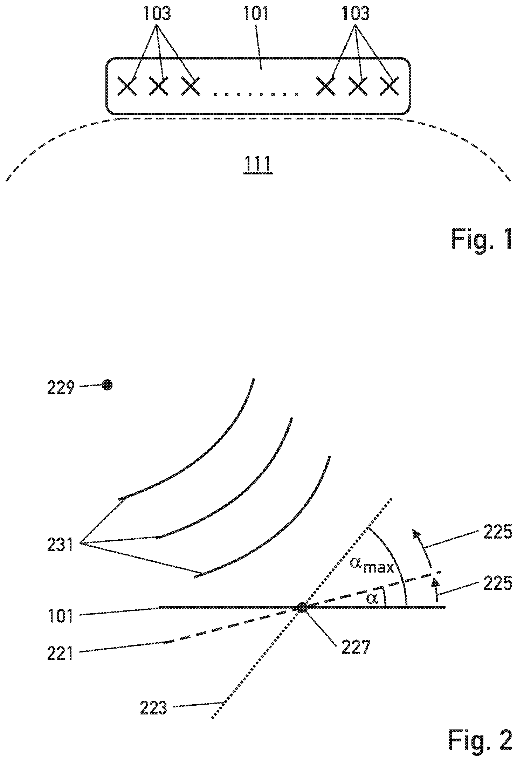

Im Weiteren wird die Erfindung anhand eines Ausführungsbeispiels näher erläutert. Es zeigen
- Figur 1: ein stark schematisch dargestelltes Seitensichtsonar (Flank Array) mit 151 einzelnen Hydrophonen, welches an ein U-Boot angeordnet ist,
- Figur 2: eine stark schematische Darstellung eines rechentechnischen Drehens des Seitensichtsonars aus Figur 1 und die durch eine Wasserschallquelle ausgesandten Unterwasserschallsignale sowie
- Figur 3: einen funktionellen Zusammenhang zwischen einer kumulierten Signalstärke S und einem Drehwinkel α sowie drei zugehörige Messwerte und die ermittelte mathematische Anpassfunktion sowie ein zu der mathematischen Anpassfunktion zugehöriges globales Maximum und daraus ableitbarer Drehwinkel.

An einem U-Boot 111 ist eine Seitensichtsonarantenne 101 angeordnet. Die Seitensichtsonarantenne 101 umfasst einzelne Hydrophone 103, welche eine Piezokeramik aufweisen. Durch die durch ein Wasserschallsignal aufgeprägten Druckunterschiede an den Piezokeramiken wird eine Spannung erzeugt, welche messtechnisch aufbereitet und ausgewertet wird. Diese Aufbereitung und Auswertung erfolgt quasi kontinuierlich. So ergibt sich an einem Hydrophon über die Zeit ein quasi kontinuierlicher Signalspannungsverlauf. Diese jeweiligen Spannungsverläufe werden mit einem zeitlichen Fensterfilter gefaltet, sodass ein Messintervall vorliegt.

Die einzelnen Hydrophonsignale werden innerhalb des zeitlichen Filterfensters jeweils zu unterschiedlichen Zeiten ausgewertet, sodass sich quasi ein rechentechnisches Drehen der Seitensichtsonarantenne 101 ergibt.

Vorliegend beträgt die Schrittweite für das Drehen Δα=2°. Zudem wird für jeden sich dadurch ausbildenden Winkel α ein kumuliertes Summensignal über sämtliche Hydrophone 103 gebildet. Das Drehen erfolgt in Drehrichtung 225. Die Drehung erfolgt dabei um den Drehpunkt 227, welcher vorliegend die Mitte der Hydrophone, vorliegend das mittlere Hydrophon mit der Zählnummer 76, ist. Sobald die (gedrehte) Seitensichtsonarantenne 223 derart gedreht (αₘₐₓ) ist, dass es im Wesentlichen parallel zu den Ausbreitungswellen 231 des Schiffschraubensignals 229 ausgesandt ist, ergibt sich das maximale Summensignal Sₘₐₓ.

Die direkten Summensignale um das ermittelte maximale Summensignal Sₘₐₓ beim Drehwinkel αₘₐₓ werden extrahiert und mittels eines Polynoms zweiter Ordnung mathematisch angefittet.

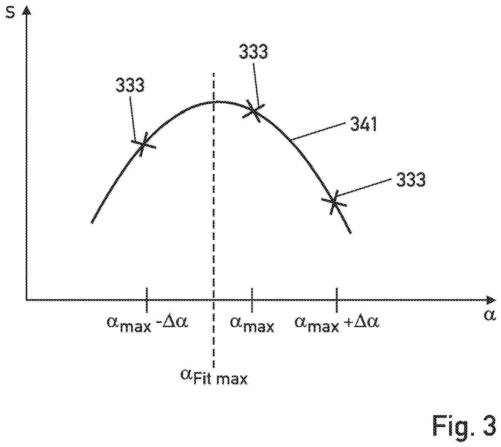

Sowohl die extrahierten Messwerte 333 mit den zugehörigen Drehwinkeln α und eine graphische Repräsentanz der ermittelten angepassten Funktion 341 sind in der Figur 3 dargestellt.

Dabei ist in dem Graphen auf der unabhängigen Achse der Drehwinkel α und auf der abhängigen Achse das Summensignal S aufgezeigt.

Zu der ermittelten mathematischen Anpassfunktion 341 wird das Maximum α_{fit,max} bestimmt. Dieses weicht etwas von dem aufgrund des Drehens des Seitensichtsonars ermittelten Werts (a ₘₐₓ) ab. Der somit ermittelte Maximalwert α_{fit,max} ist eine merkliche Verbesserung zu dem Winkelwert αₘₐₓ und gibt die Richtung vom Drehpunkt 227 zum Punkt der Schallquelle 229 an, sodass eine Peilung erfolgt.

### Bezugszeichenliste

- 101: Seitensichtsonarantenne
- 103: Hydrophone
- 111: U-Boot
- 221/223: elektronisch zur Antenne 101 geschwenkte Antenne
- 225: Drehrichtung
- 227: Drehpunkt
- 229: Unterwasserschallquellen
- 231: Unterwasserschallwellen
- 333: Messwerte
- 341: graphischer Verlauf einer Anpassfunktion

## Patentansprüche

1. Verfahren zum Richtungsermitteln einer Wasserschallquelle (229), welche ein Wasserschallsignal aussendet, mittels einer Hydrophonanordnung (103), welche eine Linearantenne oder eine virtuelle Linearantenne bildet, wobei das Verfahren folgende Schritte aufweist:
- Ermitteln des an der Hydrophonanordnung anliegenden Wasserschallsignals zu einer ersten Messzeit t₁,
- Durchführen einer elektronischen Antennenschwenkanalyse, welche ein Summensignal S der Linearantenne oder der virtuellen Linearantenne zu jedem Drehwinkel αₙ₌α₀±nΔα, mit α₀ als Anfangswinkel, Δα als Schrittweitenwinkel und n=0,1,2,3,4..., bestimmt, sodass eine Messreihe S(α) vorliegt,
- Bestimmen eines Maximumsummensignals Sₘₐₓ(αₘₐₓ), mit αₘₐₓ als Maximumdrehwinkel, der Messreihe S(a),
- Bestimmen einer Anpassmessreihe S_{Fit}(α), welche das Maximumsummensignal Sₘₐₓ(αₘₐₓ) und wenigstens zwei weitere Summensignale S(αₙ)ₘ, mit der Summenanzahl m=2, 3, 4..., aufweist,
- Bestimmen einer mathematischen Anpassfunktion f_{Fit}(α_{Fit}) zu der Anpassmessreihe S_{Fit}(α) mittels einer mathematischen Ausgleichsrechnung und
- Bestimmen eines Anpassfunktionsmaximums f_{Fit,Max}(α_{Fit,Max}) der mathematischen Anpassfunktion f_{Fit}(α_{Fit}), wobei mittels α_{Fit,Max} die Richtung der Wasserschallquelle bestimmt wird.

2. Verfahren nach Anspruch 1, **dadurch gekennzeichnet, dass** das Verfahren oder Teilschritte des Verfahrens zu einer zweiten Messzeit t₂, zu einer dritten Messzeit t₃, zu einer vierten Messzeit t₄ und/oder zu weiteren Zeitpunkten t durchgeführt wird oder werden und die entsprechenden Messreihen S(α)ₜ oder die ermittelten Richtungen der Wasserschallquelle gemittelt werden.

3. Verfahren nach Anspruch 2, **dadurch gekennzeichnet, dass** im Falle von Teilschritten die übrigen Schritte des Verfahrens nach Anspruch 1 durchgeführt werden.

4. Verfahren nach einem der vorherigen Ansprüche, **dadurch gekennzeichnet, dass** die weiteren Summensignale benachbarte Summensignalwerte zum Maximumsummensignal Sₘₐₓ(αₘₐₓ) sind.

5. Verfahren nach einem der vorherigen Ansprüche, dass die mathematische Anpassfunktion eine Polynomfunktion, eine Gaußfunktion, eine Lorentzfunktion oder eine Voigtfunktion ist.

6. Sonar, insbesondere passives Sonar, umfassend eine Hydrophonanordnung (103), welche eine Linearantenne oder eine virtuelle Linearantenne bildet und einen Rechner, der eingerichtet ist, das Verfahren nach Anspruch 1 bis 5 durchzuführen.

7. Wasserfahrzeug (111), welches ein Sonar nach Anspruch 6 aufweist

8. Rechnerprogrammprodukt, umfassend Befehle, die bewirken, dass das Sonar des Anspruchs 6 die Verfahrensschritte nach Ansprüche 1-5 ausführt.

## Claims

1. Method for determining the direction of a source (229) of waterborne sound that emits a waterborne acoustic signal, doing so by means of a hydrophone arrangement (103) which forms a linear antenna or a virtual linear antenna, wherein the method comprises the following steps:
- Determining the waterborne acoustic signal incoming at the hydrophone arrangement at a first measurement time t₁,
- Performing an electronic antenna swing analysis which determines a sum signal S of the linear antenna or of the virtual linear antenna at every rotation angle αₙ = α₀ ± nΔα, where α₀ is the starting angle, Δα is the step-width angle, and n = 0, 1, 2, 3, 4 ..., such that a measurement series S(α) is created,
- Determining a maximum sum signal Sₘₐₓ(αₘₐₓ), where αₘₐₓ is the maximum rotation angle of the measurement series S(α),
- Determining a fit measurement series S_{Fit}(α), which includes the maximum sum signal Sₘₐₓ(αₘₐₓ) and at least two more sum signals S(αₙ)ₘ, with the sum number m = 2, 3, 4 ...,
- Determining a mathematical fit function f_{Fit}(α_{Fit}) for the fit measurement series S_{Fit}(α) by means of a mathematical equalization calculation, and
- Determining a fit function maximum f_{Fit,Max}(α_{Fit,Max}) of the mathematical fit function f_{Fit}(α_{Fit}), wherein the direction of the waterborne sound source is determined by means of α_{Fit,Max}.

2. Method according to claim 1, **characterized in that** the procedure is or sub-steps of the procedure are carried out at a second measurement time t₂, at a third measurement time t₃, at a fourth measurement time t₄, and/or at further times t, wherein the corresponding measurement series S(α)ₜ or the determined directions of the waterborne sound source are averaged.

3. Method according to claim 2, **characterized in that** in case of sub-steps the remaining steps of the procedure are carried out according to claim 1.

4. Method according to one of the preceding claims, **characterized in that** the additional sum signals are sum signal values adjacent to the maximum sum signal Sₘₐₓ(αₘₐₓ).

5. Method according to one of the preceding claims wherein the mathematical fit function is a polynomial function, a Gaussian function, a Lorentz function, or a Voigt function.

6. Sonar, in particular, a passive sonar, comprising a hydrophone arrangement (103) forming a linear antenna or a virtual linear antenna and a computer configured to perform the method according to claims 1 to 5.

7. Watercraft (111) which comprises a sonar according to claim 6.

8. Computer program product comprising instructions causing the sonar of claim 6 to perform the method steps of any one of claims 1-5.

## Revendications

1. Procédé de détermination de la direction d'une source d'un son transmis par l'eau (229) qui émet un signal sonore transmis par l'eau, au moyen d'un ensemble d'hydrophones (103) qui forme une antenne linéaire ou une antenne linéaire virtuelle, le procédé présentant les étapes suivantes consistant à :
- déterminer le signal sonore transmis par l'eau, présent au niveau de l'ensemble d'hydrophones, à un premier instant de mesure t₁,
- effectuer une analyse électronique d'un pivotement d'antenne qui détermine un signal de somme S de l'antenne linéaire ou de l'antenne linéaire virtuelle pour chaque angle de rotation αₙ = α₀±nΔα, où α₀ est l'angle initial, Δα est l'angle d'incrément et n = 0, 1, 2, 3, 4, ..., de sorte qu'une série de mesures S(α) existe,
- déterminer un signal de somme maximal Sₘₐₓ(αₘₐₓ), où αₘₐₓ est l'angle de rotation maximal, de la série de mesures S(α),
- déterminer une série de mesures d'adaptation S_{Fit}(α) qui présente le signal de somme maximal Sₘₐₓ(αₘₐₓ) et au moins deux autres signaux de somme S(αₙ)ₘ, avec le nombre de sommes m = 2, 3, 4,
- déterminer une fonction d'adaptation mathématique f_{Fit}(α_{Fit}) pour la série de mesures d'adaptation S_{Fit}(α) au moyen d'un calcul de compensation mathématique, et
- déterminer un maximum de fonction d'adaptation f_{Fit,Max}(α_{Fit,Max}) de la fonction d'adaptation mathématique f_{Fit}(α_{Fit}), la direction de la source d'un son transmis par l'eau étant déterminée au moyen de α_{Fit,Max}.

2. Procédé selon la revendication 1, **caractérisé en ce que** le procédé ou des étapes partielles du procédé est effectué/sont effectuées à un deuxième instant de mesure t₂, à un troisième instant de mesure t₃, à un quatrième instant de mesure t₄ et/ou à d'autres instants t, et les séries de mesures S(α)ₜ correspondantes ou les directions déterminées de la source d'un son transmis par l'eau sont moyennées.

3. Procédé selon la revendication 2, **caractérisé en ce que** dans le cas des étapes partielles, les autres étapes du procédé sont effectuées selon la revendication 1.

4. Procédé selon l'une quelconque des revendications précédentes, **caractérisé en ce que** les autres signaux de somme sont des valeurs de signal de somme voisines du signal de somme maximal Sₘₐₓ(αₘₐₓ).

5. Procédé selon l'une quelconque des revendications précédentes, **caractérisé en ce que** la fonction d'adaptation mathématique est une fonction polynomiale, une fonction de Gauss, une fonction de Lorentz ou une fonction de Voigt.

6. Sonar, en particulier sonar passif, comprenant un ensemble d'hydrophones (103) qui forme une antenne linéaire ou une antenne linéaire virtuelle, et un ordinateur qui est conçu pour effectuer le procédé selon les revendications 1 à 5.

7. Véhicule marin (111) présentant un sonar selon la revendication 6.

8. Produit de programme informatique, comprenant des instructions qui amènent le sonar selon la revendication 6 à effectuer les étapes de procédé selon les revendications 1 à 5.
